(19) Europäisches Patentamt
European Patent Office
Office européen des brevets

(11) **EP 2 535 868 A1**

(12) **EUROPEAN PATENT APPLICATION**

(43) Date of publication:
**19.12.2012 Bulletin 2012/51**

(51) Int Cl.:
***G06T 7/00*** (2006.01)

(21) Application number: **12162591.7**

(22) Date of filing: **30.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.06.2011 CN 201110159926**

(71) Applicant: **Fujitsu Limited**
**Kawasaki-shi, Kanagawa 211-8588 (JP)**

(72) Inventors:
• **Xie, Shufu**
**100025 Chaoyang District (CN)**

• **He, Yuan**
**100025 Chaoyang District (CN)**
• **Sun, Jun**
**100025 Chaoyang District (CN)**
• **Yu, Hao**
**100025 Chaoyang District (CN)**
• **Naoi, Satoshi**
**100025 Chaoyang District (CN)**

(74) Representative: **Holz, Ulrike**
**Haseltine Lake LLP**
**Lincoln House, 5th Floor**
**300 High Holborn**
**London WC1V 7JH (GB)**

(54) **Image processing method, image processing device and scanner**

(57)   The image processing method includes: determining an edge map of a foreground object in an image; obtaining candidates for a boundary line from the edge map and determining the boundary line among the candidates for the boundary line, the boundary line defining the boundary of a specific object in the foreground object; and removing the foreground object beyond the boundary line other than the specific object. This method can be applied to removing an image of another object, e.g., hands, etc., in a captured image beyond the boundary of a specific object. With the image processing method according to the embodiment of the invention, the boundary of the specific object in the image can be determined accurately to thereby remove another object beyond the boundary and facilitate subsequent other image processing.

INPUT AN IMAGE

S210 DETERMINE AN EDGE MAP OF A FOREGROUND OBJECT IN THE IMAGE

S220 OBTAIN CANDIDATES FOR A BOUNDARY LINE FROM THE EDGE MAP AND DETERMINE THE BOUNDARY LINE AMONG THE CANDIDATES FOR THE BOUNDARY LINE, THE BOUNDARY LINE DEFINING THE BOUNDARY OF A SPECIFIC OBJECT IN THE FOREGROUND OBJECT

S230 REMOVE THE FOREGROUND OBJECT BEYOND THE BOUNDARY LINE OTHER THAN THE SPECIFIC OBJECT

OUTPUT THE IMAGE

**FIG.2**

EP 2 535 868 A1

## Description

### Field of the Invention

The present invention generally relates to the field of image processing, particularly to a method for removing from a captured image another object beyond the boundary of a specific object.

### Background of the Invention

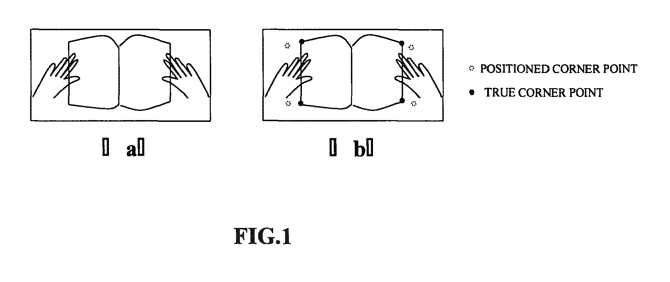

When an image of a thick document is captured with a camera or a scanner, a user tends to press both sides of the document by hands or somehow to keep the document flat, as illustrated in Fig.1(a) Presence of hands or something else in the image of the document may have an influence upon results of some subsequent processes, for example, of positioning the top of the document, correcting the image of the document, etc. As illustrated in Fig.1(b), there is an influence upon detection of corner points of a book due to presence of the hands so that the positioned corner points deviate somewhat from the true corner points. Therefore the hands in the image beyond the boundary of a specific object (e.g., the book in Fig.1(b) etc.) have to be removed to thereby minimize the influence upon a result of a subsequent process due to presence of the hands.

Traditional hand detecting methods fall into two general categories, one of which is to create a skin color model from a lot of training data and to categorize pixels of an image to thereby detect a region of hands, and the other of which is to create a statistic model from a lot of training data, to detect hands and to further position the boundary of the hands accurately using a skin color model after a region of the hands is detected. The first category of methods have such a drawback that they are subject to such a great influence of the training data that they are very likely to fail if the color of the hands in the image can not be well modeled and tested with the skin color model or there are many regions of a color similar to the color of skin other than the region of the hands, and the second category of methods have such a drawback that they require a lot of training data of hands for learning a classifier with a strong classifying capability and their effectiveness may not be guaranteed due to a great diversity of appearances of hands.

### Summary of the Invention

In view of the foregoing problems, embodiments of the invention propose to reserve a region in an image inside the boundary of a specific object to thereby remove indirectly from the image a region of hands or another object than the specific object. According to the embodiments of the invention, a boundary of a document is fitted from a current image without requiring a lot of offline training data for creating a model to thereby perform a convenient and prompt process with good popularity. Furthermore the efficiency and preciseness of image processing can be improved significantly by this technique of removing the region of the other object.

According to an embodiment of the invention, there is provided an image processing method including: determining an edge map of a foreground object in an image; obtaining candidates for a boundary line from the edge map and determining the boundary line among the candidates for the boundary line, the boundary line defining the boundary of a specific object in the foreground object; and removing the foreground object beyond the boundary line other than the specific object.

According to another embodiment of the invention, there is provided an image processing device including: edge map determining means for determining an edge map of a foreground object in an image; boundary line determining means for obtaining candidates for a boundary line from the edge map and determining the boundary line among the candidates for the boundary line, the boundary line defining the boundary of a specific object in the foreground object; and removing means for removing the foreground object beyond the boundary line other than the specific object.

According to a still another embodiment of the invention, there is provided a program product including machine readable instruction codes stored thereon which when being read and executed by a machine perform the foregoing image processing method.

According to a further embodiment of the invention, there is provided a storage medium including the foregoing program product according the embodiment of the invention embodied thereon.

### Brief Description of the Drawings

The foregoing and other objects and advantages of the invention will be further described below in conjunction with the embodiments thereof and with reference to the drawings in which identical or like technical features or components will be denoted with identical or like reference numerals. In the drawings:

Fig.1(a) is a schematic diagram illustrating pressing both sides of a book by hands to keep the book flat;

Fig.1(b) is an illustrative diagram illustrating misjudgment of corner points due to presence of the hands on the boundary of the book;

Fig.2 is a schematic diagram of a process of removing the hands beyond the boundary illustrated in Fig.1(a) according to an embodiment of the invention;

Fig.3 is a flow chart illustrating a process of determining an edge map from an input image;

Fig.4(a) and Fig.4(b) are illustrative diagrams illustrating comparison between a raw image and the binary masked image;

Fig.5(a) and Fig.5(b) are illustrative diagrams illustrating of obtained left and right edge maps, and Fig.5(c) and Fig.5(d) are illustrative diagrams illustrating a candidate for a boundary line obtained by fitting from the left and right edge maps;

Fig.6(a) and Fig.6(b) are flow charts illustrating a process of determining a boundary line from an edge map;

Fig.7(a) is an illustrative diagram illustrating taking a region of a specific width taken on two sides of a fitted line, and Fig.7(b) is an illustrative diagram illustrating obtaining a feature vector on the two sides of the fitted line;

Fig.8(a) and Fig.8(b) are illustrative diagrams illustrating comparison between a raw image and the image with hands removed;

Fig.9 is a configuration block diagram of an image processing device according to another embodiment of the invention;

Fig.10(a) and Fig.10(b) are configuration block diagrams respectively illustrating edge map determining means in the image processing device according to the other embodiment of the invention;

Fig.11 is a configuration block diagram illustrating boundary line determining means in the image processing device according to the other embodiment of the invention; and

Fig.12 is a schematic structural diagram illustrating a general-purpose computer system in which the image processing method according to the embodiment of the invention can be embodied.

## Detailed Description of the Invention

Embodiments of the invention will be described below with reference to the drawings. It shall be noted only those device structures and/or processes closely relevant to solutions of the invention is illustrated in the drawings while other details less relevant to the invention are omitted so as not to obscure the invention due to those unnecessary details. Identical or like constituent elements or components will be denoted with identical or like reference numerals throughout the drawings.

According to an embedment of the invention, there is provided an image processing method including: determining an edge map of a foreground object in an image (S210); obtaining candidates for a boundary line from the edge map and determining the boundary line among the candidates for the boundary line, the boundary line defining the boundary of a specific object in the foreground object (S220); and removing the foreground object beyond the boundary line other than the specific object (S230).

Embodiments of the invention will be detailed below with reference to the drawings by way of an example in which a non-specific object in an image, i.e., the hands beyond the boundary of the book illustrated in Fig.1(a) is removed. Both the book and the hands are foreground objects in Fig.1(a). Of course those skilled in the art shall appreciate that the image processing method according to the embodiment of the invention can also be applicable to removal of another object beyond the boundary of the book than the hands. Furthermore the specific object for which the boundary is to be determined for removal of the region of the other object will not be limited to the book but can be any foreground object in the image as needed.

In this embodiment, it is assumed that the left and right boundaries of the book need to be determined and the region of the hands beyond the left and right boundaries is to be removed. However those skilled in the art shall appreciate that the image processing method according to the embodiment of the invention can be similarly applicable with the hands or another object being on the upper and lower boundaries of the book in the image.

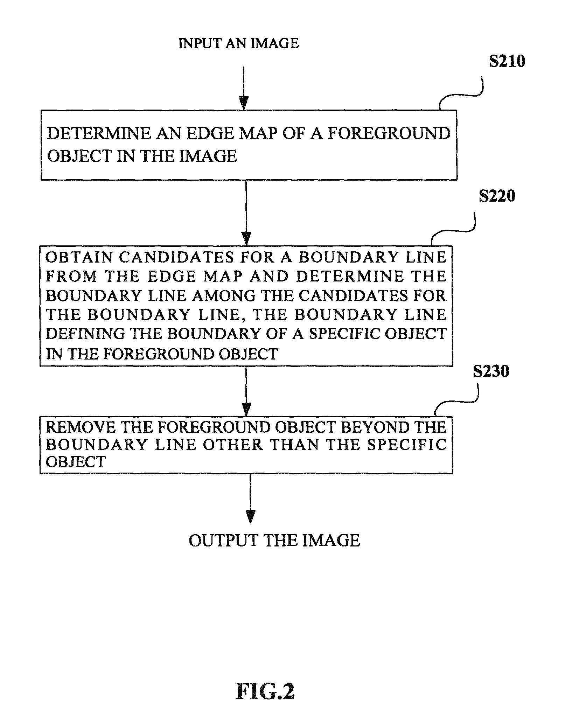

Various implementations of the respective processes in Fig.2 will be detailed below.

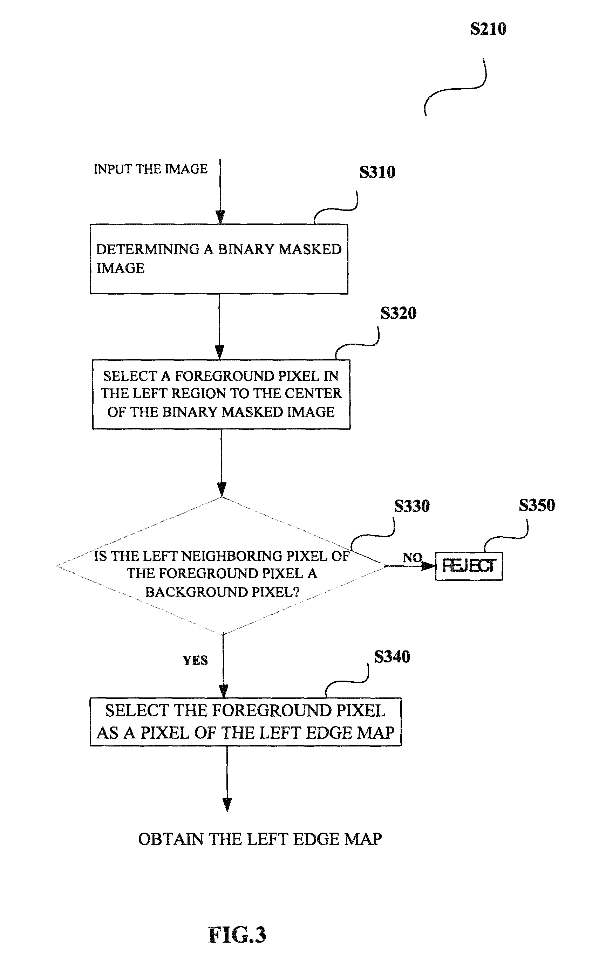

Firstly a specific implementation of a process at S210 where an edge map is determined will be described with reference to Fig.3.

As illustrated in Fig.3, firstly a binary masked image is determined from an input image at S310. A specific example of obtaining a binary masked image will be briefly described below.

Given an input image f(x, y) ($0 \leq x \leq w-1$ and $0 \leq y \leq h-1$) (w and h represent the width and the height of the input image respectively), the average of color $f_{background}$ of a background region of the image is estimated from a boundary region of the image. Here the background region of the image is assumed as a uniform texture region, and therefore the average of color of the background can be estimated easily from the boundary region of the image. Then a distance image can be calculated from the raw image according to the estimated average of color of the background as indicated in the equation (1):

$$dist(x,y) = \left| f(x,y) - f_{background} \right| \qquad\qquad (1)$$

Here |·| represents the $L_1$ distance (block distance) between two vectors. The $L_1$ distance is a parameter commonly used in the field to represent the difference between two vectors, and the concept and solving method thereof are well know to those skilled in the art, so a repeated description of details thereof will be omitted here. For the distance image dist(x, y) ($0 \le x \le w-1$ and $0 \le y \le h-1$), a threshold T can be obtained by Otsu algorithm, and the input image is binarized with the threshold, as indicated in the equation (2):

$$mask(x,y) = \begin{cases} 0 \ if \ dist(x,y) > T \\ 255 \ else \end{cases} \qquad\qquad (2)$$

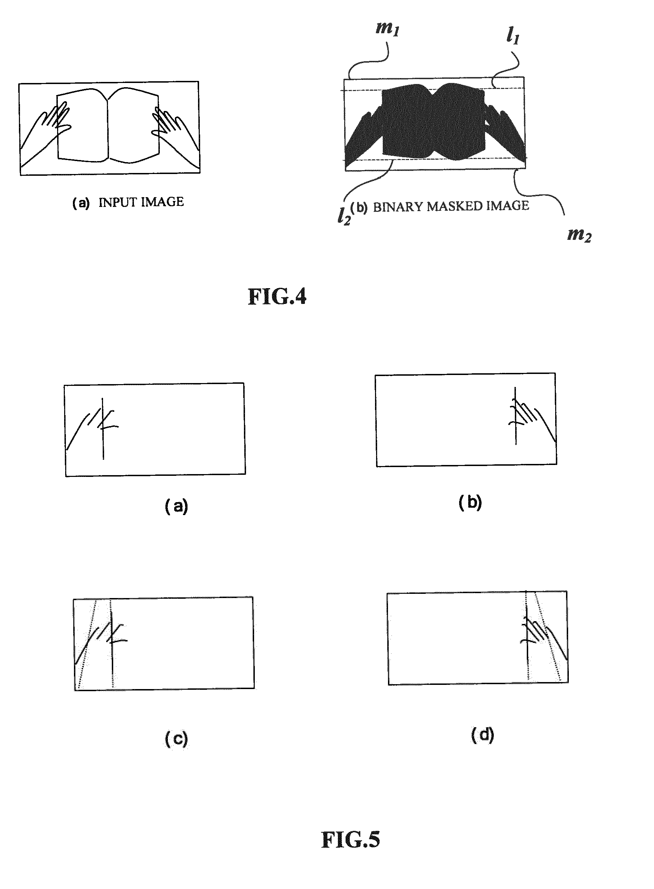

Fig.4(a) and Fig.4(b) illustrate the input image and the binary masked image thereof respectively. As can be apparent, foreground pixels in the masked image in Fig.4b (i.e., black pixels) include the hands and the book.

Referring back to Fig.3, a process of obtaining an edge map from the binary masked image is started after the binary masked image is obtained. Specifically a foreground pixel is selected in the left region to the center of the masked image at S320; and then it is determined whether the left neighboring pixel thereof is a background (white) pixel at S330, and if so, then the foreground pixel is selected as a pixel of a left edge map at S340; otherwise, the pixel is rejected at S350. Fig.3 illustrates illustratively the process of obtaining a pixel of the left edge map, and similarly a process of calculating the right edge map from the binary masked image is as follows: in the right region to the center of the masked image, if a current pixel is a foreground (black) pixel and a right neighboring pixel thereof is background (white) pixel, then the foreground pixel is a pixel of the right edge map. The foregoing process can be performed between the upper and lower boundaries $l_1$ and $l_2$ of the masked image illustrated in Fig.4(b) or the upper and lower boundaries $m_1$ and $m_2$ of the entire image, and the invention will not be limited in this respect. The center and the upper and lower boundaries of the masked image can be obtained as in the prior art, and a description thereof will be omitted in the invention. Fig. 5(a) and Fig.5(b) illustrate respectively the thus obtained left edge map and right edge map of the binary masked image.

A method for obtaining an edge map from a raw document image is not limited to what is described above but can be otherwise performed. For example, for obtaining the left edge map, the difference in luminance between a foreground pixel on the raw image and a left neighboring pixel thereof, and if the difference is above a preset threshold, then the pixel is determined as a pixel of the left edge map; and similarly the difference in luminance between each foreground pixel on the raw image and a right neighboring pixel thereof, and if the difference is above a preset threshold, then the pixel is determined as a right edge pixel. The threshold can be set dependent upon a practical condition (for example, the difference in luminance between a foreground pixel and a background pixel of the raw image, etc.) or experimentally or empirically.

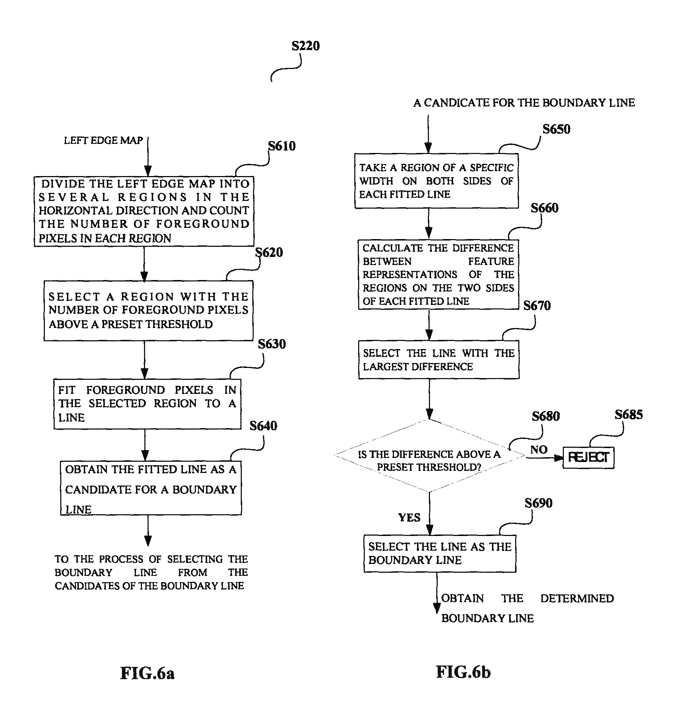

Now referring back to Fig.2, after the process at S210 where the edge map is determined from the raw image, a next process at S220 is started, where candidates for a boundary line are obtained from the edge map, and the boundary line is determined from the candidates for the boundary line. A specific implementation of the process at S220 will be detailed below with reference to Fig.6.

Obtaining candidates for a boundary line from the edge map and determining the boundary line among the candidates for the boundary line (S220) can include firstly obtaining candidates for a boundary line from the edge map through fitting (Fig.6a) and then determining the boundary line among the candidates for the boundary line (Fig.6b).

Firstly a process of a specific example of obtaining candidates for a boundary line from the edge map through fitting will be described with reference to Fig.6a. The following description will be presented taking the left edge map as an example but will equally apply to the right edge map. At S610, the left edge map is divided into several regions of a predetermined size, for example, several rectangular regions of a predetermined width, etc., in the horizontal direction (i.e., the direction of the upper and lower edges of the document), and the number of foreground pixels in each region is counted. At S620, a region with the number of foreground pixels above a preset threshold is selected, that is, only a region with the number of foreground pixels above the preset threshold is reserved, and at S630, a line is fitted using the foreground pixels in the region. A line fitting method can be the recursive least square method, for example, and of course, a line fitting result can alternatively be obtained in any appropriate line fitting method in the prior art. At S640, the fitting line is obtained as a candidate for a boundary line. Fig.5(a) and Fig.5(b) illustrate resultant lines by fitting on the left edge map and the right edge map respectively. As illustrated in Fig.5(a) and Fig.5(b), a dotted line represents a resultant boundary line candidate obtained by fitting. Although each figure illustrates only two candidates, they are merely illustrative, and a larger or smaller number of candidates can be obtained in practice. Of course the true boundary line has not been determined in this phase.

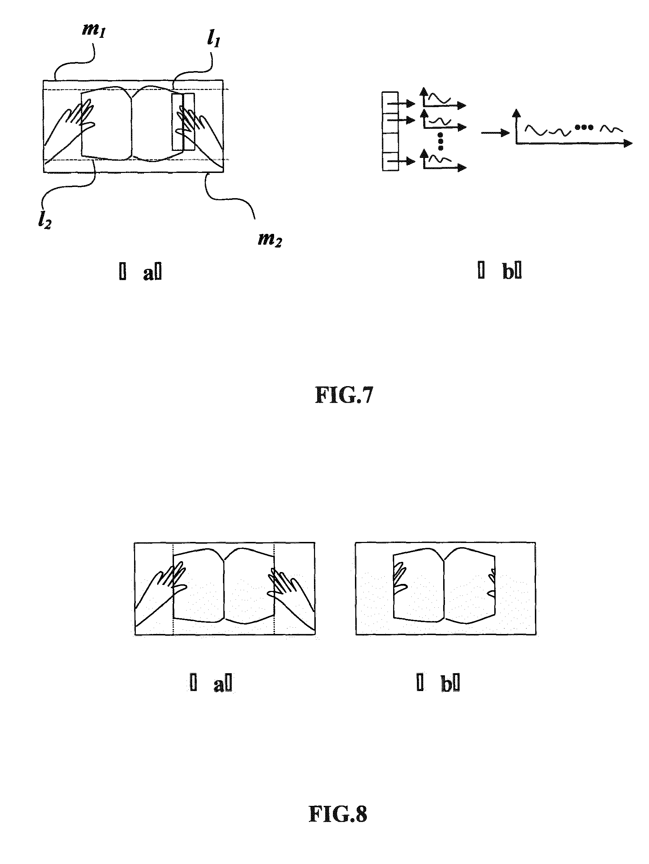

Fig.6b illustrates an example of a process of selecting the boundary line from the fitted lines. Specifically at S650, a region of a specific width is taken respectively on each side of each fitted line, i.e., each candidate of the boundary line, as illustrated in Fig.7a. Noted the region of a specific width is extracted from the raw image. Fig.7a illustrates a scenario where a rectangular region is taken from the specific object in the image, that is, between the upper and lower boundaries $l_1$ and $l_2$ of the book, but it shall be noted that the invention will not be limited thereto because the region can alternatively be taken between the upper and lower boundaries $m_1$ and $m_2$ of the entire image as required under a specific condition. Then the difference between feature representations of the two regions is calculated at S660. The difference can be calculated with the $L_1$ distance, the Euclidean distance, etc., and the invention is not limited in this respect. The line with the largest difference between the regions on the two sides is selected from the fitted lines from the left and right edge maps at S670. It is determined whether the difference between the regions on the two sides of the selected line is above a preset distance at S680, and if so, then the line is accepted as the boundary of the book at S690; otherwise, the line is rejected at S685. In an alternative embodiment, the candidate for the boundary line with the largest difference between the feature representations can be adopted as the resulting true boundary line without performing the final determination at S680.

If the determination at S680 is made, then a further benefit can be obtained, that is, a rate of false determination can be lowered to the minimum. A false determination refers to mistaking of the central line of the book for the boundary line, etc, to thereby remove contents in a subsequent process which would otherwise not be removed, e.g., the contents of the book itself, etc.

The difference between the feature representations of the two regions is calculated at S660. A specific example of how to calculate the difference between the feature representations on the two sides will be described below with reference to Fig.7(b). As illustrated in Fig.7(b), each selected region is characterized by histogram feature representations of sub-regions, that is, the region is divided into several sub-regions respectively in the horizontal and vertical directions; the values of the R, G and B colors of respective pixels in each sub-region are quantized respectively into different quantization intervals based on a preset quantization intervals, and then color histograms of each sub-region are calculated respectively over the three R, G and B color channels and the three histograms are connected into a color histogram representation of the sub-region; and finally the color histogram representations of these sub-regions are connected into a color histogram representation of the entire region. The feature representation can be other than a histogram representation so long as the difference between feature representations on two sides of a candidate for the boundary line to be processed can be obtained. A color histogram is a concept commonly used in the art to represent the proportion of a different color in the entire image without caring the spatial location of each color. All the values in the histogram are obtained through statistics and they describe a quantity feature in terms of colors in the image and can reflect a statistic distribution and fundamental hues of image colors in the color histogram. For details of a color histogram, reference can be made to "Computer Vision" by Shapiro, Linda G and Stockman, George C., Prentice Hall, 2003 ISBN 0130307963, and "Color Histogram" http://en.wikipedia.orglwiki/Color_histogram.

Although a color histogram feature is used above to calculate the difference between feature representations, any other appropriate feature representation can be applied so long as the feature representation is sufficient to represent the difference between specific regions (rectangular regions of a specific width in this example) on two sides of a candidate for the boundary line. Furthermore the region for calculation of the difference between feature representations will not necessarily be rectangular but any appropriate shape can be used.

As can be apparent, in a specific example, if only one candidate for the boundary line is obtained in the foregoing process, then this candidate can be taken directly as the final true boundary line.

Referring back to Fig.2, a process at S230 is performed after S220 to remove the foreground object beyond the boundary line other than the specific object, i.e., the hands beyond the boundary of the book in this embodiment. Thus the image of the book with the hands removed is obtained. Fig.8(a) and Fig.8(b) illustrates the raw image and an illustrative image with the hands removed respectively.

Noted in the foregoing process, if the book which is a specific object is significantly tilted, for example, beyond a specific range relative to the vertical direction of the image (e.g., -15° to 15°, etc.,) etc., then in a preferable embodiment the direction of the image to be processed is estimated and corrected as in the prior art so that the object of the book in the image to be processed is tilted within a predetermined range to thereby further improve the precision of image processing described above. For details of estimating and correcting the direction of an image in the prior art, reference can be made to, for example, "Skew and Slant Correction for Document Images Using Gradient Direction" by Sun Changming and Si Deyi in the 4th International Conference on Document Analysis and Recognition, etc.

Although the foregoing detailed description has been presented by way of an example in which the image of hands beyond the boundary of an image of a book is removed, those skilled in the art shall appreciate that such an image processing solution can equally be applied to removing an image of various other objects beyond the boundary of an image of a book, which will not be enumerated here.

Furthermore the region in the image between the left and right boundaries of the specific object (e.g., a book, etc.) is determined so as to remove the region of the hands beyond the boundaries in the respective embodiments and specific examples described above, but the processes according to the embodiments of the invention can equally be applied to determining the region in the image between the upper and lower boundaries of the specific object so as to remove the region of another object beyond the boundaries, and processes thereof are similar, so a repeated description thereof will be omitted here for the sake of conciseness.

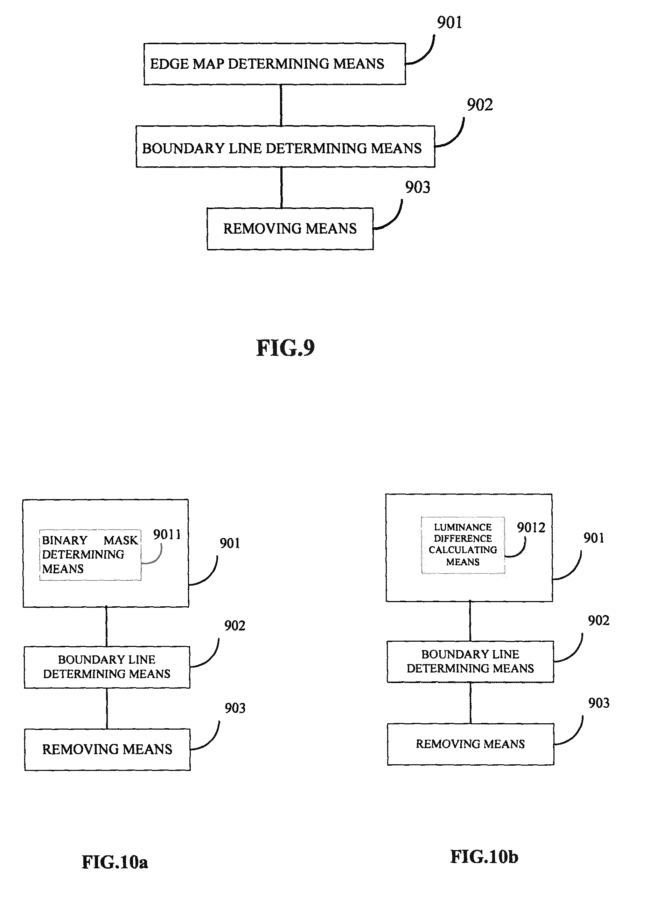

In correspondence to the image processing method according to the embodiment of the invention, an embodiment of the invention provides an image processing device as illustrated in Fig.9 which includes:

Edge map determining means 901 for determining an edge map of a foreground object in an image;

Boundary line determining means 902 for obtaining candidates for a boundary line from the edge map and determining the boundary line among the candidates for the boundary line, the boundary line defining the boundary of a specific object in the foreground object; and

Removing means 903 for removing the foreground object beyond the boundary line other than the specific object.

In a specific example, the edge map can be determined with a binary mask, and referring to Fig.10a, the edge map determining means 901 can include:

Binary mask determining means 9011 for determining a binary mask for the captured image in which a background object is distinguished from the foreground object; and the edge map determining means 901 determines the edge map according to the binary mask determined by the binary mask determining means 9011.

In another specific example, the edge map can alternatively be determined from the difference in luminance, and referring to Fig.10b, the edge map determining means 901 can further include:

Luminance difference calculating means 9012 for calculating the difference in luminance between a foreground pixel of the foreground object in the image and a neighboring pixel of the foreground pixel on one side of the foreground pixel, adjacent to the foreground pixel and farther from the center of the foreground object than the foreground pixel; and if the difference is above a predetermined first threshold, then determining the foreground pixel as a pixel of the edge map.

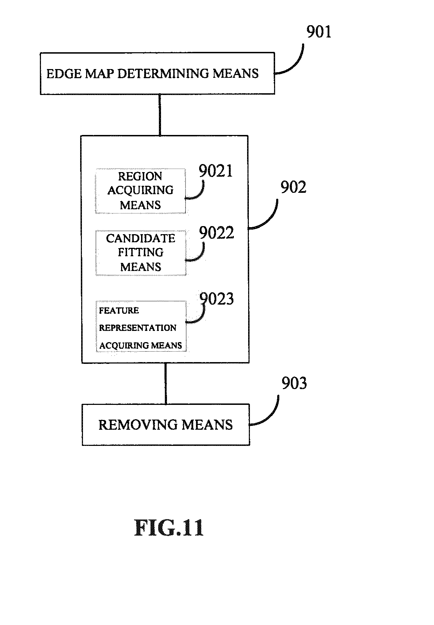

In another specific example, with reference to Fig.11, the boundary line determining means 902 can include:

Region obtaining means 9021 for obtaining the number of foreground pixels taking region of a predetermined size as a unit on the obtained edge map, the number of the foreground pixels obtained by counting foreground pixels in the edge map contained in the region of the predetermined size, and for selecting a region with the number of foreground pixels above a predetermined second threshold value;

Candidate fitting means 9022 for fitting the foreground pixels contained in the selected region to the candidates for the boundary line; and

Feature representation obtaining means 9023 for obtaining, from the raw image, feature representations of regions of a specific width on two sides of each candidate for the boundary line adjacent to the candidate for the boundary line, and determining the difference between the feature representations of the regions on the two sides, and for selecting the candidate for the boundary line with the largest difference between the feature representations as the boundary line.

The image processing device according to the embodiment of the invention described above with reference to Fig.9 to Fig.11 and the respective constituent means thereof can be configured, for example, to perform, the image processing method according to the embodiments of the invention described with reference to Fig.2 to Fig.8 and can achieve similar benefits. For details thereof, reference can be made to the foregoing relevant description, and a repeated description thereof will be omitted here.

The foregoing detailed description has been presented in the block diagrams, the flow charts and/or the embodiments to set forth a variety of implementations of the device and/or the method according to the embodiment(s) of the invention. Those skilled in the art shall appreciate that the respective functions and/or operations in these block diagrams, the flow charts and/or the embodiments can be performed separately and/or collectively in a variety of hardware, software, firmware or essentially any combination thereof. In an embodiment, several aspects of the subject matter described in this specification can be embodied in an Application Specific Integrated Circuit (ASIC), a Field Programmable Gate Array (FPGA), a Digital Signal Processor (DSP) or another integrated form. However those skilled in the art shall appreciate that some aspects of the implementations described in this specification can be wholly or partially embodied in an integrated circuit in the form of one or more computer programs running on one or more computers (e.g., in the form of one or more computer programs running on one or more computer systems), in the form of one or more programs running on one or more processors (e.g., in the form of one or more programs running on one or more microprocessors), in the form of firmware or equivalently in the form of essentially any combination thereof, and those skilled in the art are capable of designing circuits for this disclosure and/or writing codes for software and/or firmware for this disclosure in light of the disclosure in this specification.

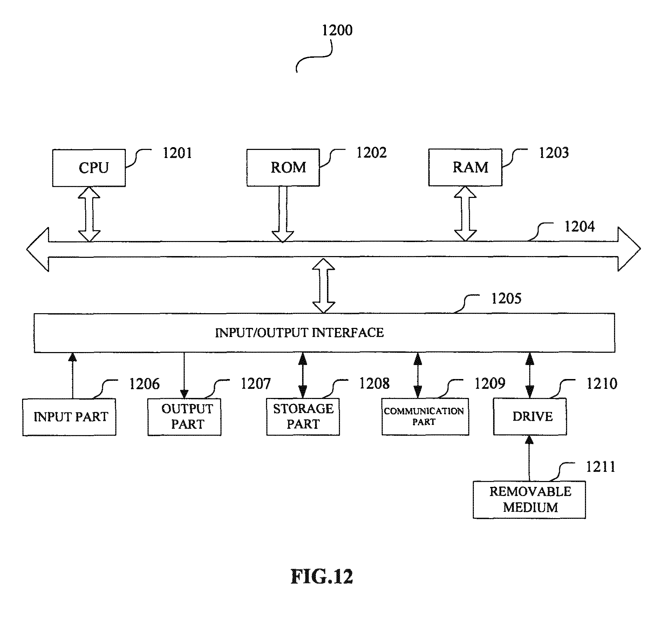

For example the respective processes in the flow charts of the processes for removing the hands beyond the boundary of the book as illustrated in Fig.2, Fig.3 and Fig.6 can be performed in software, firmware, hardware or any combination thereof. In the case of being performed in software or firmware, a program constituting the software can be installed from a storage medium or a network to a computer with a specialized hardware structure (e.g., a general-purpose computer 1200 illustrated in Fig.12), which can perform various functions when a variety programs are installed thereon.

Fig.12 illustrates a general structural diagram of a general-purpose computer system in which the image processing method according to the embodiment of the invention can be embodied. The computer system 1200 is merely illustrative but not intended to suggest any limitation of a scope of applications or of functions of the method and device according to the invention. Furthermore the computer system 1200 shall not be construed as relying upon or requiring any one or combination of components illustrated in the illustrative operating system 1200.

In Fig.12, a Central Processing Unit (CPU) 1201 performs various processes according to a program stored in a Read Only Memory (ROM) 1202 or loaded from a storage part 1208 into a Random Access Memory (RAM) 1203 in which data required when the CPU 1201 performs the various processes is also stored as needed. The CPU 1201, the ROM 1202 and the RAM 1203 are connected to each other via a bus 1204 to which an input/output interface 1205 is also connected.

The following components are also connected to the input/output interface 1205: an input part 1206 (including a keyboard, a mouse, etc.), an output part 1207 (including a display, e.g., a Cathode Ray Tube (CRT), a Liquid Crystal Display (LCD), etc., and a speaker, etc.), a storage port 1208 (including a hard disk, etc.) and a communication part 1209 (including a network interface card, e.g., an LAN card, a modem, etc.). The communication part 1209 performs a communication process over a network, e.g., the Internet. A drive 1210 can also be connected to the input/output interface 1205 as needed. A removable medium 1211, e.g., a magnetic disk, an optical disk, an optic-magnetic disk, a semiconductor memory, etc., can be installed on the drive 1210 as needed so that a computer program fetched therefrom can be installed into the storage part 1208 as required.

In the case that the foregoing series of processes are performed in software, a program constituting the software is installed from the network, e.g., the Internet, etc., or a storage medium, e.g., the removable medium 1211, etc.

Those skilled in the art shall appreciate that such a storage medium will not be limited to the removable medium 1211 illustrated in Fig.12 in which the program is stored and which is distributed separately from the device to provide a user with the program. Examples of the removable medium 1211 include a magnetic disk (including a Floppy Disk), an optical disk (including Compact Disk-Read Only memory (CD-ROM) and a Digital Versatile Disk (DVD)), an optic-magnetic disk (including a Mini Disk (MD) (a registered trademark)) and a semiconductor memory. Alternatively the storage medium can be the ROM 1202, the hard disk included in the storage part 1208, etc., in which the program is stored and which is distributed together with the device including the same to the user.

Therefore the invention further proposes a program product including machine readable instruction codes stored therein which can perform the foregoing image processing method according to the embodiments of invention when being read and executed by a machine. Correspondingly the various storage mediums listed above in which the program product is embodied will also come into the scope of the invention.

In the foregoing description of the embodiments of the invention, a feature described and/or illustrated in an embodiment can be used identically or similarly in one or more other embodiments in combination with or in place of a feature in the other embodiment(s).

It shall be noted that the terms "include/comprise" as used in this context refer to presence of a feature, an element, a process or a component but do not preclude presence or addition of one or more other features, elements, processes or components. The terms "first", "second", etc., relating ordinal numbers do not mean any execution order or any degree of importance of features, elements, processes or components as defined with these terms but are merely intended to identify these features, elements, processes or components for the sake of clarity of the description.

Furthermore the method according to the respective embodiments of the invention will not be limited to being performed in the temporal sequence described in the specification or illustrated in the drawings but can also be performed in another temporal sequence, concurrently or separately. Therefore the sequence in which the method is performed described in the specification will not limit the scope of the invention.

The following annexes are also disclosed in connection with implementations including the foregoing embodiments.

Annex 1. An image processing method, including:

determining an edge map of a foreground object in an image;

obtaining candidates for a boundary line from the edge map and determining the boundary line among the candidates for the boundary line, the boundary line defining the boundary of a specific object in the foreground object; and

removing the foreground object beyond the boundary line other than the specific object.

Annex 2. A method according to Annex 1, wherein the process of determining the edge map of the foreground object in the image includes: obtaining a binary mask for the captured image in which a background object is distinguished from the foreground object; and then determining the edge map according to the binary mask.

Annex 3. A method according to Annex 2, wherein the process of determining the edge map according to the binary mask includes: selecting a foreground pixel in a region on one side of the center of the binary masked image, and if a pixel farther from the center of the foreground object than the foreground pixel and adjacent to the foreground pixel is a background pixel, then determining the foreground pixel as a pixel of the edge map.

Annex 4. A method according to Annex 1, wherein the process of determining the edge map of the foreground object in the image includes: calculating the difference in luminance between a foreground pixel of the foreground object and a neighboring pixel of the foreground pixel on one side of the foreground pixel, adjacent to the foreground pixel and farther from the center of the foreground object than the foreground pixel; and if the difference is above a predetermined first threshold, then determining the foreground pixel as a pixel of the edge map.

Annex 5. A method according to any one of Annexes 1 to 4, wherein the process of obtaining the candidates for the boundary line from the edge map includes:

obtaining the number of foreground pixels taking a region of a predetermined size as a unit on the obtained edge map, the number of foreground pixels obtained by counting foreground pixels in the edge map contained in the region of the predetermined size, and selecting a region with the number of foreground pixels above a predetermined second threshold value; and

fitting the foreground pixels contained in the selected region to get the candidates for the boundary line.

Annex 6. A method according to any one of Annexes 1 to 5, wherein the process of determining the boundary line among the candidates for the boundary line includes:

for each candidate for the boundary line, obtaining, from the raw image, feature representations of regions of a specific width on two sides of the candidate for the boundary line adjacent to the candidate for the boundary line; and

determining the difference between the feature representations of the regions on the two sides, and selecting the candidate for the boundary line with the largest difference between the feature representations as the boundary line.

Annex 7. A method according to Annex 6, wherein the candidate with the largest difference between the feature representations above a preset threshold is selected as the boundary line.

Annex 8. A method according to Annex 6, wherein the feature representation includes color histograms or gray-level histograms corresponding respectively to the regions on the two sides, and wherein the each of the regions on the two sides is divided into several sub-regions, and color histogram or gray-level histograms are obtained from counting in the respective sub-regions and then the histograms of these sub-regions are connected to get the feature representation of the region.

Annex 9. A method according to any one of Annexes 1 to 8, wherein the edge map includes the left edge map and the right edge map, and the boundary line includes the left boundary line and the right boundary line.

Annex 10. An image processing device for performing the method according to any one of Annexes 1 to 9, including:

edge map determining means for determining an edge map of a foreground object in an image;

boundary line determining means for obtaining candidates for a boundary line from the edge map and determining the boundary line among the candidates for the boundary line, the boundary line defining the boundary of a specific object in the foreground object; and

removing means for removing the foreground object beyond the boundary line other than the specific object.

Annex 11. An image processing device according to Annex 10, wherein the edge map determining means includes binary mask determining means for determining a binary mask for the captured image in which a background object is distinguished from the foreground object.

Annex 12. An image processing device according to Annex 10 or 11, wherein the edge map determining means further includes luminance difference calculating means for calculating the difference in luminance between a foreground pixel of the foreground object in the image and a neighboring pixel of the foreground pixel on one side of the foreground pixel, adjacent to the foreground pixel and farther from the center of the foreground object than the foreground pixel; and if the difference is above a predetermined first threshold, then determining the foreground pixel as a pixel of the edge map.

Annex 13. An image processing device according to any one of Annexes 10 to 12, wherein the boundary line determining means includes:

region obtaining means for obtaining the number of foreground pixels taking a region of a predetermined size as a unit on the obtained edge map, the number of foreground pixels obtained by counting foreground pixels in the edge map contained in the region of the predetermined size, and for selecting a region with the number of foreground pixels above a predetermined second threshold value;

candidate fitting means for fitting the foreground pixels contained in the selected region to obtain the candidates for the boundary line; and

feature representation obtaining means for obtaining, from the raw image, feature representations of regions of a specific width on two sides of each candidate for the boundary line adjacent to the candidate for the boundary line, for determining the difference between the feature representations of the regions on the two sides, and for selecting the candidate for the boundary line with the largest difference between the feature representations as the boundary line.

Annex 14. A scanner, including the image processing device according to any one of Annexes 10 to 13.

Annex 15. A program product, including machine readable instruction codes which performs the foregoing image processing method when being read and executed by a machine.

Annex 16. A storage medium, including the program product according to Annex 15.

Although the invention has been disclosed above in the description of the embodiments of the invention, it shall be appreciated that those skilled in the art can devise various modifications, adaptations or equivalents to the invention without departing from the spirit and scope of the invention. These modifications, adaptations or equivalents shall also be construed as coming into the scope of the invention.

**Claims**

1.  An image processing method, comprising:

determining an edge map of a foreground object in an image;
obtaining candidates for a boundary line from the edge map and determining the boundary line among the candidates for the boundary line, the boundary line defining the boundary of a specific object in the foreground object; and
removing the foreground object beyond the boundary line other than the specific object.

2.  The method according to claim 1, wherein the process of determining the edge map of the foreground object in the image comprises: obtaining a binary mask for the captured image in which a background object is distinguished from the foreground object; and then determining the edge map according to the binary mask.

3.  The method according to claim 2, wherein the process of determining the edge map according to the binary mask comprises: selecting a foreground pixel in a region on one side of the center of the binary masked image, and if a pixel farther from the center of the foreground object than the foreground pixel and adjacent to the foreground pixel is a background pixel, then determining the foreground pixel as a pixel of the edge map.

4. The method according to claim 1, wherein the process of determining the edge map of the foreground object in the image comprises: calculating the difference in luminance between a foreground pixel of the foreground object and a neighboring pixel of the foreground pixel on one side of the foreground pixel, adjacent to the foreground pixel and farther from the center of the foreground object than the foreground pixel; and if the difference is above a predetermined first threshold, then determining the foreground pixel as a pixel of the edge map.

5. The method according to any one of claims 1-4, wherein the process of obtaining the candidates for the boundary line from the edge map comprises:

obtaining the number of foreground pixels taking a region of a predetermined size as a unit on the obtained edge map, the number of foreground pixels obtained by counting foreground pixels in the edge map contained in the region of the predetermined size, and selecting a region with the number of foreground pixels above a predetermined second threshold value; and
fitting the foreground pixels contained in the selected region to obtain the candidates for the boundary line.

6. The method according to any one of claims 1-5, wherein the process of determining the boundary line among the candidates for the boundary line comprises:

for each candidate for the boundary line, obtaining, from the raw image, feature representations of regions of a specific width on two sides of the candidate for the boundary line adjacent to the candidate for the boundary line; and
determining the difference between the feature representations of the regions on the two sides, and selecting the candidate for the boundary line with the largest difference between the feature representations as the boundary line.

7. The method according to claim 6, wherein the candidate with the largest difference between the feature representations above a preset threshold is selected as the boundary line.

8. The method according to claim 6, wherein the feature representation comprises color histograms or gray-level histograms corresponding respectively to the regions on the two sides, and wherein the each of the regions on the two sides is divided into several sub-regions, and color histogram or gray-level histograms are obtained from counting in the respective sub-regions and then the histograms of these sub-regions are connected to obtain the feature representation of the region.

9. An image processing device, comprising:

edge map determining means for determining an edge map of a foreground object in an image;
boundary line determining means for obtaining candidates for a boundary line from the edge map and determining the boundary line among the candidates for the boundary line, the boundary line defining the boundary of a specific object in the foreground object; and
removing means for removing the foreground object beyond the boundary line other than the specific object.

10. An image processing device according to claim 9, wherein the edge map determining means comprises binary mask determining means for determining a binary mask for the captured image in which a background object is distinguished from the foreground object, and the edge map determining means is configured for determining the edge map according to the binary mask in the following manner: selecting a foreground pixel in a region on one side of the center of the binary masked image, and if a pixel farther from the center of the foreground object than the foreground pixel and adjacent to the foreground pixel is a background pixel, then determining the foreground pixel as a pixel of the edge map.

11. An image processing device according to claim 9 or 10, wherein the edge map determining means further comprises luminance difference calculating means for calculating the difference in luminance between a foreground pixel of the foreground object in the image and a neighboring pixel of the foreground pixel on one side of the foreground pixel, adjacent to the foreground pixel and farther from the center of the foreground object than the foreground pixel; and if the difference is above a predetermined first threshold, then determining the foreground pixel as a pixel of the edge map.

**12.** An image processing device according to any one of claims 9-11, wherein the boundary line determining means comprises:

region obtaining means for obtaining the number of foreground pixels taking a region of a predetermined size as a unit on the obtained edge map, the number of foreground pixels obtained by counting foreground pixels in the edge map contained in the region of the predetermined size, and for selecting a region with the number of foreground pixels above a predetermined second threshold value;

candidate fitting means for fitting the foreground pixels contained in the selected region to obtain the candidates for the boundary line.

**13.** An image processing device according to any one of claims 9-12, wherein the boundary line determining means comprises:

feature representation obtaining means for obtaining, from the raw image, feature representations of regions of a specific width on two sides of each candidate for the boundary line adjacent to the candidate for the boundary line, for determining the difference between the feature representations of the regions on the two sides, and for selecting the candidate for the boundary line with the largest difference between the feature representations as the boundary line.

**14.** An image processing device according to claim 13, wherein the feature representation comprises color histograms or gray-level histograms corresponding respectively to the regions on the two sides, and wherein the each of the regions on the two sides is divided into several sub-regions, and color histogram or gray-level histograms are obtained from counting in the respective sub-regions and then the histograms of these sub-regions are connected to obtain the feature representation of the region.

**15.** A scanner, comprising the image processing device according to any one of claims 9-14.

〔 a〕　　　　　　　　〔 b〕

⊙ POSITIONED CORNER POINT

● TRUE CORNER POINT

**FIG.1**

INPUT AN IMAGE

S210

DETERMINE AN EDGE MAP OF A FOREGROUND OBJECT IN THE IMAGE

S220

OBTAIN CANDIDATES FOR A BOUNDARY LINE FROM THE EDGE MAP AND DETERMINE THE BOUNDARY LINE AMONG THE CANDIDATES FOR THE BOUNDARY LINE, THE BOUNDARY LINE DEFINING THE BOUNDARY OF A SPECIFIC OBJECT IN THE FOREGROUND OBJECT

S230

REMOVE THE FOREGROUND OBJECT BEYOND THE BOUNDARY LINE OTHER THAN THE SPECIFIC OBJECT

OUTPUT THE IMAGE

FIG.2

S210

INPUT THE IMAGE                    S310

```
┌─────────────────────────────┐
│ DETERMINING A BINARY MASKED │
│ IMAGE                       │
└─────────────────────────────┘
```

S320

```
┌─────────────────────────────────┐
│ SELECT A FOREGROUND PIXEL IN    │
│ THE LEFT REGION TO THE CENTER   │
│ OF THE BINARY MASKED IMAGE      │
└─────────────────────────────────┘
```

S330                    S350

IS THE LEFT NEIGHBORING PIXEL OF
THE FOREGROUND PIXEL A                NO → ┌──────────┐
BACKGROUND PIXEL?                           │ REJECT   │
                                            └──────────┘

YES                    S340

```
┌──────────────────────────────────┐
│ SELECT THE FOREGROUND PIXEL      │
│ AS A PIXEL OF THE LEFT EDGE MAP  │
└──────────────────────────────────┘
```

OBTAIN THE LEFT EDGE MAP

**FIG.3**

$m_1$　　　$l_1$

(a) INPUT IMAGE　　　$l_2$ (b) BINARY MASKED IMAGE　　　$m_2$

## FIG.4

(a)

(b)

(c)

(d)

## FIG.5

S220

LEFT EDGE MAP

S610

DIVIDE THE LEFT EDGE MAP INTO SEVERAL REGIONS IN THE HORIZONTAL DIRECTION AND COUNT THE NUMBER OF FOREGROUND PIXELS IN EACH REGION

S620

SELECT A REGION WITH THE NUMBER OF FOREGROUND PIXELS ABOVE A PRESET THRESHOLD

S630

FIT FOREGROUND PIXELS IN THE SELECTED REGION TO A LINE

S640

OBTAIN THE FITTED LINE AS A CANDIDATE FOR A BOUNDARY LINE

TO THE PROCESS OF SELECTING THE BOUNDARY LINE FROM THE CANDIDATES OF THE BOUNDARY LINE

A CANDICATE FOR THE BOUNDARY LINE

S650

TAKE A REGION OF A SPECIFIC WIDTH ON BOTH SIDES OF EACH FITTED LINE

S660

CALCULATE THE DIFFERENCE BETWEEN FEATURE REPRESENTATIONS OF THE REGIONS ON THE TWO SIDES OF EACH FITTED LINE

S670

SELECT THE LINE WITH THE LARGEST DIFFERENCE

S680    S685

IS THE DIFFERENCE ABOVE A PRESET THRESHOLD?

NO → REJECT

YES

S690

SELECT THE LINE AS THE BOUNDARY LINE

OBTAIN THE DETERMINED BOUNDARY LINE

FIG.6a                    FIG.6b

EP 2 535 868 A1

（ a ）

（ b ）

**FIG.7**

（ a ）

（ b ）

**FIG.8**

901

EDGE MAP DETERMINING MEANS

902

BOUNDARY LINE DETERMINING MEANS

903

REMOVING MEANS

**FIG.9**

BINARY MASK DETERMINING MEANS  9011

901

BOUNDARY LINE DETERMINING MEANS

902

REMOVING MEANS

903

LUMINANCE DIFFERENCE CALCULATING MEANS  9012

901

BOUNDARY LINE DETERMINING MEANS

902

REMOVING MEANS

903

**FIG.10a**

**FIG.10b**

901

EDGE MAP DETERMINING MEANS

REGION ACQUIRING MEANS 9021

CANDIDATE FITTING MEANS 9022

FEATURE REPRESENTATION ACQUIRING MEANS 9023

902

REMOVING MEANS 903

FIG.11

1200

| | | |
|---|---|---|
| CPU ⌐ 1201 | ROM ⌐ 1202 | RAM ⌐ 1203 |

⌐ 1204

⌐ 1205

INPUT/OUTPUT INTERFACE

| INPUT PART ⌐ 1206 | OUTPUT PART ⌐ 1207 | STORAGE PART ⌐ 1208 | COMMUNICATION PART ⌐ 1209 | DRIVE ⌐ 1210 |
|---|---|---|---|---|

REMOVABLE MEDIUM ⌐ 1211

FIG.12

Europäisches
Patentamt

European
Patent Office

Office européen
des brevets

## EUROPEAN SEARCH REPORT

Application Number

EP 12 16 2591

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 256 411 B1 (IIDA KENTARO [JP]) 3 July 2001 (2001-07-03) | 1,9,15 | INV. G06T7/00 |
| Y | * column 6, line 19 - column 9, line 41 * | 3,4,6-8, 10,11, 13,14 | |
| | ----- | | |
| X | US 2005/244046 A1 (YAMAMOTO ICHIRO [JP]) 3 November 2005 (2005-11-03) | 1,2,5,9, 12,15 | |
| Y | * paragraph [0056] - paragraph [0068] * * paragraph [0093] - paragraph [0097] * | 3,4,6-8, 10,11, 13,14 | |
| | ----- | | |
| Y | William K. Pratt: "Digital Image Processing", 1 January 2007 (2007-01-01), Wiley-Interscience, Hoboken, New Jersey, XP002681103, ISBN: 978-0-471-76777-0 * page 477 - page 492 * | 3,4,10, 11 | |
| | ----- | | |
| Y | MARTIN D LEVINE ET AL: "Dynamic Measurement of Computer Generated Image Segmentations", IEEE TRANSACTIONS ON PATTERN ANALYSIS AND MACHINE INTELLIGENCE, IEEE SERVICE CENTER, LOS ALAMITOS, CA, US, vol. 30, no. 2, 1 March 1985 (1985-03-01), pages 155-164, XP011242828, ISSN: 0162-8828 * Chapter V: Line Contrast * | 6,7,13 | **TECHNICAL FIELDS SEARCHED (IPC)** <br><br> G06T |
| | ----- <br> -/-- | | |

The present search report has been drawn up for all claims

| Place of search | Date of completion of the search | Examiner |
|---|---|---|
| Munich | 31 July 2012 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 12 16 2591

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LIOR WOLF ET AL: "Patch-Based Texture Edges and Segmentation", 1 January 2006 (2006-01-01), COMPUTER VISION - ECCV 2006 LECTURE NOTES IN COMPUTER SCIENCE;;LNCS, SPRINGER, BERLIN, DE, PAGE(S) 481 - 493, XP019036461, ISBN: 978-3-540-33834-5 * Chapter 3: Patch Based Texture Edge Detection * | 8,14 | |

TECHNICAL FIELDS
SEARCHED        (IPC)

The present search report has been drawn up for all claims

| Place of search | Date of completion of the search | Examiner |
|---|---|---|
| Munich | 31 July 2012 | Rockinger, Oliver |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 12 16 2591

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2012

| Patent document cited in search report | | Publication date | Patent family member(s) | | Publication date |
|---|---|---|---|---|---|
| US 6256411 | B1 | 03-07-2001 | JP<br>US | 10336439 A<br>6256411 B1 | 18-12-1998<br>03-07-2001 |
| US 2005244046 | A1 | 03-11-2005 | CN<br>JP<br>US<br>WO | 1685373 A<br>4286790 B2<br>2005244046 A1<br>2004081887 A1 | 19-10-2005<br>01-07-2009<br>03-11-2005<br>23-09-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHAPIRO, LINDA G ; STOCKMAN, GEORGE C.** Computer Vision. Prentice Hall, 2003
- *Color Histogram, http://en.wikipedia.or-glwiki/Color_histogram*
- **SUN CHANGMING ; SI DEYI.** Skew and Slant Correction for Document Images Using Gradient Direction. *4th International Conference on Document Analysis and Recognition*